# EUROPÄISCHE PATENTANMELDUNG

(11) **EP 3 664 183 A1**
(43) Veröffentlichungstag der Anmeldung: **10.06.2020**
(21) Anmeldenummer: 18210191.5
(22) Anmeldetag: 04.12.2018
(51) Int. Cl.: H01M 2/10, H01M 10/60, H01M 10/6552

(54) **BATTERIETRÄGER FÜR MEHRERE BATTERIEMODULE**

(71) Anmelder: voestalpine Automotive Components Dettingen GmbH & Co. KG, 72581 Dettingen an der Erms (DE)
(72) Erfinder: Lanksweirt, Jochen, 89522 Heidenheim (DE)
(74) Vertreter: Jell, Friedrich

(57) **Zusammenfassung**

Es wird ein Batterieträger (1) für mehrere Batteriemodule (15), mit einem Batteriegehäuse (2), das Gehäuseseitenwände (5.1, 5.2, 5.3, 5.4) und einen mit den Gehäuseseitenwänden (5.1, 5.2, 5.3, 5.4) verbundenen Gehäuseboden (6) aufweist, mit einem mit dem Batteriegehäuse (2) lösbar verbindbaren Deckel (3), mit einer zur Befestigung der Batteriemodule (15) vorgesehenen Halterung (7), die mindestens ein im Batteriegehäuse (2) verlaufendes Profil (8) aufweist, und mit einem Latentwärmespeicher (9) gezeigt, der ein Phasenwechselmaterial (9.1) aufweist. Um ein höchstes Maß an Temperierung der im Batterieträger vorgesehenen Batteriemodule gewährleisten zu können, wird vorgeschlagen, dass der Latentwärmespeicher (9) eine feste, wärmeleitende Trägerstruktur (9.2) aufweist, welche das Phasenwechselmaterial (9.1) aufnimmt, wobei der Latentwärmespeicher (9) im Profil (8) vorgesehen ist.

## Beschreibung

Die Erfindung betrifft einen Batterieträger für mehrere Batteriemodule, mit einem Batteriegehäuse, das Gehäuseseitenwände und einen mit den Gehäuseseitenwänden verbundenen Gehäuseboden aufweist, mit einem mit dem Batteriegehäuse lösbar verbindbaren Deckel, mit einer zur Befestigung der Batteriemodule vorgesehenen Halterung, die mindestens ein im Batteriegehäuse verlaufendes Profil aufweist, und mit einem Latentwärmespeicher, der ein Phasenwechselmaterial aufweist.

Batterieträger mit einem Latentwärmespeicher auszustatten, ist beispielsweise aus der EP 2985804 A1 bekannt. Der Latentwärmespeicher wird in diesem Fall in einem Zwischenraum der doppelt ausgeführten Gehäuseseitenwand des Gehäuses des Batterieträgers vorgesehen. Das Phasenwechselmaterial des Latentwärmespeichers wird entweder in den Zwischenraum direkt oder über mikrogekapselte Elemente eingefüllt. Nachteilig erhöhen doppelt ausgeführte Gehäuseseitenwände das Gewicht des Batterieträgers erheblich.

Die DE 102016115647 B3 offenbart alle Merkmale des Oberbegriffs des Anspruchs 1 - und schlägt alternativ zur EP 2985804 A1 vor, einen Latentwärmespeicher im Deckel des Batterieträgers vorzusehen, welcher allerdings ebenso doppelwandig ausgeführt ist.

Die Erfindung hat sich daher die Aufgabe gestellt, eine Batterieträger mit einem Latentwärmespeicher der eingangs geschilderten Art konstruktiv derart zu verändern, dass - ohne eine Gewichtserhöhung in Kauf nehmen zu müssen - ein höchstes Maß an Temperierung der im Batterieträger vorgesehenen Batteriemodule gewährleistet wird.

Die Erfindung löst die gestellte Aufgabe durch die Merkmale des Anspruchs 1.

Weist der Latentwärmespeicher eine feste wärmeleitende Trägerstruktur auf, kann durch dessen Formstabilität auf eine Kapselung des Latentwärmespeichers durch Bauteile des Batterieträgers verzichtet werden. Damit kann sich unter anderem die Konstruktion des Batterieträgers vereinfachten, zumal es - im Gegensatz zum Stand der Technik - auch nicht einer doppelwandigen Ausführung am Batteriegehäuse oder am Batteriedeckel bedarf.
Die Formstabilität des Latentwärmespeichers kann auch genutzt werden, den Latentwärmespeicher im Profil vorzusehen. Damit befindet sich der Latentwärmespeicher in unmittelbarer Nähe zu den Batteriemodulen. Da zudem das Profil im Batteriegehäuse verläuft, kann dies auch zur gleichmäßigeren Temperierung der Batteriemodule beitragen - insbesondere auch durch die Nähe des Latentwärmespeichers zu den Batteriemodulen. Temperaturspitzen aufgrund einer vergleichsweise hohen Leistungsabgabe und/oder einer hohen Ladeleistung der Batteriemodule können so schnell an den Latentwärmespeicher herangeführt und von diesem ausgeglichen werden, was die Standfestigkeit der Batteriemodule deutlich erhöhen kann.
Derart kann der erfindungsgemäße Batterieträger nicht nur in der Konstruktion leichter ausgeführt sein, sondern kann die Batteriemodule auch gleichmäßiger temperieren.

Das Gewicht des Batterieträgers ist weiter verringerbar, wenn ein zellulärer Werkstoff die feste, wärmeleitende Trägerstruktur des Latentwärmespeichers ausbildet. Insbesondere kann sich hierbei ein zellulärer, offenporiger Werkstoff auszeichnen, um einen hohen Anteil an Phasenwechselmaterial aufzunehmen. Vorzugsweise Graphitschaum als zellulärer Werkstoff kann sich diesbezüglich eignen - und zwar aufgrund seines vergleichsweise geringen Gewichts, seiner relativ hohen Speicherkapazität an Phasenwechselmaterial und seiner hohen mechanischen Belastbarkeit. Des Weiteren ist durch Verwendung von Graphit als Matrix-Material eine hohe Wärmeleitfähigkeit und somit ein homogener Wärmetransport innerhalb des Latentwärmespeichers erreichbar, was zu einer gleichmäßigeren Temperierung der Batteriemodule beitragen kann.

Bildet Wachs das Phasenwechselmaterial des Latentwärmespeichers aus, kann solch ein kostengünstig und auf einfache Weise herzustellender Latentwärmespeicher dazu beitragen.

Die Verwindungssteifigkeit der Halterung kann sich erhöhen, wenn das Profil von einem, insbesondere geschlossenen, Hohlprofil oder offenen Profil, insbesondere Hutprofil, ausgebildet wird. In den von den Profilen ausgebildeten Profilraum - also jenen Raum, welcher von den Profilen zumindest teilweise umschlossen wird - kann zudem die feste, wärmeleitende Trägerstruktur einfach und sicher eingebracht werden.

Die Wirkung des Latentwärmespeichers kann auch bei vergleichsweise hoher Wärmeaufnahme/-abgabe aufrechterhalten werden, wenn der Batterieträger eine Leitung für eine Flüssigkeit zur Temperierung des Batteriemoduls aufweist, wobei die Leitung vom Latentwärmespeicher abschnittsweise ummantelt ist.

Vorzugsweise weist die Halterung mehrere Profile auf, welche eine, insbesondere selbstragende, Rahmenstruktur im Batteriegehäuse ausbilden. Dies kann nicht nur eine sichere Halterung der Batteriemodule im Batteriegehäuse, sondern auch eine besonders standfeste Positionierung des Latentwärmespeichers gegenüber den Batteriemodulen ermöglichen.

Sind Profile als Längs- und Querträger vorgesehen, kann die Halterung im Batteriegehäuse besonders platzsparend angeordnet werden. Zudem erleichtert diese Konstruktion auch, den Latentwärmespeicher im Profil einzubringen. Beispielsweise kann der Latentwärmespeicher in Längsrichtung des jeweiligen Profils eingeschoben werden.

Die Konstruktion des Batterieträgers ist sich zu vereinfachen, wenn eine, insbesondere tiefgezogene, Wanne oder ein Faltkasten das Batteriegehäuse ausbildet.

Insbesondere kann sich der erfindungsgemäße Batterieträger bei einem Fahrzeug auszeichnen, wenn der Batterieträger unterhalb des Karosseriebodens angeordnet ist.

In den Figuren ist beispielsweise der Erfindungsgegenstand anhand einer Ausführungsvariante näher dargestellt. Es zeigen
Fig. 1 eine aufgerissene Seitanschicht auf einen Batterieträger und
Fig. 2 eine Draufsicht auf den Batterieträger nach Fig. 1 mit abgenommenem Deckel.

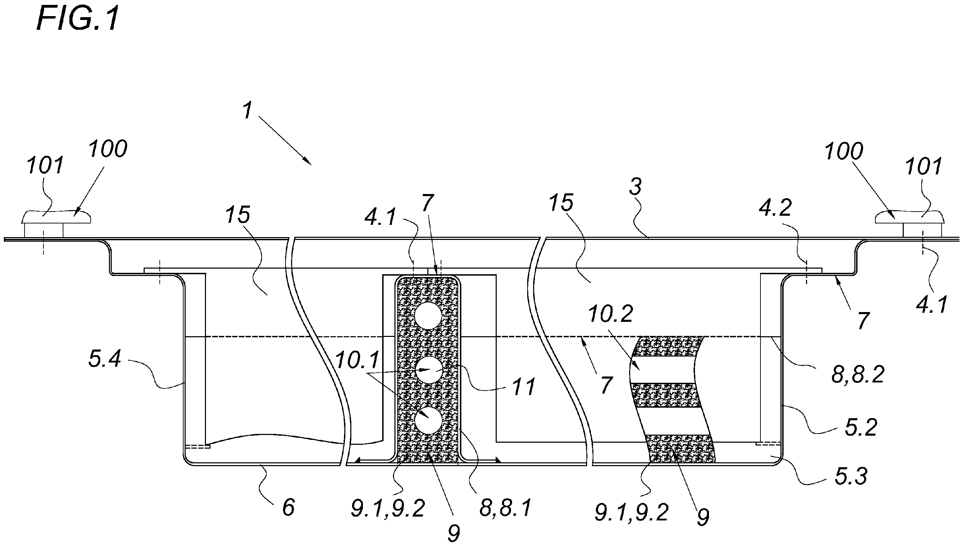

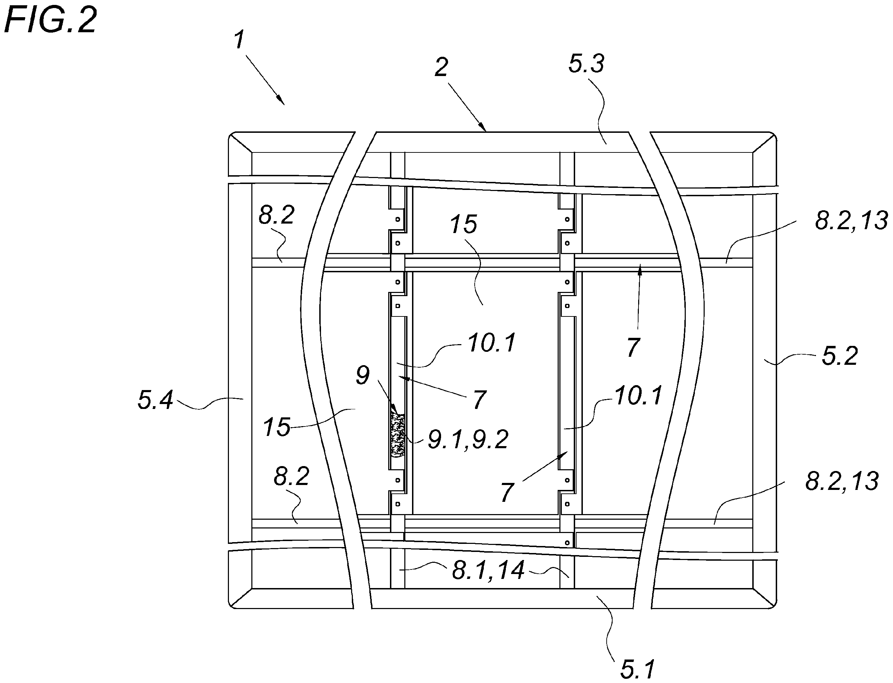

Nach den Figuren 1 und 2 wird beispielsweise ein Batterieträger 1 mit einer Batteriegehäuse 2 und mit einem die Batteriegehäuse 2 verschließenden Deckel 3 dargestellt. Dieser Deckel 3 ist mit dem Batteriegehäuse 2 über angedeutet dargestellte erste Schraubverbindungen 4.1 lösbar verbundenen. Das Batteriegehäuse 2 weist Gehäuseseitenwände 5.1, 5.2, 5.3, 5.4 und einen mit den Gehäuseseitenwänden 5.1, 5.2, 5.3, 5.4 verbundenen Gehäuseboden 6 auf. Das Batteriegehäuse 2 kann beispielsweise eine umgeformte, insbesondere tiefgezogene, Wanne, ein Faltgehäuse, ein mehrteiliges Gehäuse mit Seitenrahmen und Boden, etc. sein.

Der Batterieträger 1 weist zudem eine Halterung 7 auf, um Batteriemodule 15 im Batteriegehäuse 2 zu tragen. Hierzu weist diese Halterung 7 unter anderem mindestens ein im Batteriegehäuse 2 verlaufendes Profil 8, nämlich Hutprofil 8.1, auf. Andere Profilformen sind hierbei ebenso denkbar - beispielsweise ein offenes Profil oder ein Hohlprofil. Als offenes Profil ist beispielsweise ein U-Profil vorstellbar, als Hohlprofil ist etwa ein offenes Hohlprofil oder ein geschlossenes Hohlprofil.
Des Weiteren ist in Fig. 1 zu erkennen, dass die Gehäuseseitenwände 5.2 und 5.4 eine Halterung 7 für die Batteriemodule 15 ausbilden.
Zweite Schraubverbindungen 4.2 verbinden die Batteriemodule 15 mit der Halterung 7 lösbar.

Der Batterieträger 1 weist zudem einen Latentwärmespeicher 9 mit einem Phasenwechselmaterial 9.1 auf, um damit die Batteriemodule 15 zu temperieren - also je nach Bedarf zu kühlen oder zu erwärmen.
Diese Batteriemodule 15 werden über nicht dargestellte elektrische Verbindungen zu einer Batterie elektrisch zusammengeschaltet. Hierfür weisen die Batteriemodule 15 elektrische Pole auf, welche ebenfalls nicht gezeigt sind. Bekanntermaßen wird unter einem Batteriemodul 15 ein zusammengeschaltetes Paket von mehreren Batteriezellen, vorzugsweise Lithium-Ionen-Zellen, verstanden, welche Batteriezellen vorzugsweise von einem Gehäuse umgeben sind.

Erfindungsgemäß weist der Latentwärmespeicher 9 eine feste, wärmeleitende Trägerstruktur 9.2 auf, die das Phasenwechselmaterial 9.1 aufnimmt. Diese feste Trägerstruktur 9.2 verleiht dem Latentwärmespeicher 9 Formstabilität - bzw. kann dieser verhältnismäßig einfach im Batterieträger 1 vorgesehen werden. Unter anderem auch im Profil 8 der Halterung 7, also in unmittelbarer Nähe zu den zu temperierenden Batteriemodulen 15. Der Latentwärmespeicher 9 kann daher deutlich effizienter zur gleichmäßigen Temperierung der Batteriemodulen 15 beitragen, was positiv auf die Lebensdauer der Batteriemodule 15 Einfluss nimmt.

Dieser Vorteil ist besonders erreichbar, wenn ein zellulärer Werkstoff die Trägerstruktur 9.2 des Latentwärmespeichers 9 ausbildet. Dieser zelluläre Werkstoff ist zudem offenporig, um die Herstellung des Latentwärmespeichers 9 zu erleichtern. Auch kann damit der Latentwärmespeicher 9 nachträglich, beispielsweise bei Wartungsarbeiten, mit Phasenwechselmaterial 9.1 getränkt werden, um die Wärmequelle/-senke des Latentwärmespeichers 9 anzupassen. Ein metallischer Werkstoff der Trägerstruktur 9.2 führt zudem zu einem niedrigen thermischen Widerstand am Latentwärmespeicher 9, wodurch solch ein Latentwärmespeicher 9 dynamisch hohe Spitzenlasten dämpfen kann.

Die Konstruktion des Latentwärmespeichers 9 ist weiter vereinfachbar, wenn Wachs dessen Phasenwechselmaterial 9.1 ausbildet.

Die Temperaturaufnahme bzw. -abgabe des Latentwärmespeichers 9 kann auf hohem Niveau gehalten werden, indem der Batterieträger 2 mehrere Leitungen 10.1, 10.2 für eine Flüssigkeit 11 zur Temperierung der Batteriemodule 15 aufweist, wobei diese Leitungen 10.1, 10.2 vom Latentwärmespeicher 9 ummantelt werden - wie dies in der Fig. 1 dargestellt ist.

Die Halterung 7 weist zudem mehrere Profile 8.1, 8.2 auf, welche eine selbstragende Rahmenstruktur 12 im Batteriegehäuse 2 ausbilden. Das Profile 8.1 ist hierzu als Längsträger 13 und das Profil 8.2 als Querträger 14 vorgesehen - dies ist speziell auch anhand Fig. 2 erkennbar. Zudem ist in Fig. 2 einer der Längsträger 13 teilweise aufgerissen dargestellt, um den Latentwärmespeicher 9 näher darzustellen.

Außerdem kann der Fig. 1 entnommen werden, dass der Batterieträger 1 unterhalb des Karosseriebodens 101 eines Fahrzeugs 100 angeordnet ist.

## Patentansprüche

1. Batterieträger für mehrere Batteriemodule (15), mit einem Batteriegehäuse (2), das Gehäuseseitenwände (5.1, 5.2, 5.3, 5.4) und einen mit den Gehäuseseitenwänden (5.1, 5.2, 5.3, 5.4) verbundenen Gehäuseboden (6) aufweist, mit einem mit dem Batteriegehäuse (2) lösbar verbindbaren Deckel (3), mit einer zur Befestigung der Batteriemodule (15) vorgesehenen Halterung (7), die mindestens ein im Batteriegehäuse (2) verlaufendes Profil (8) aufweist, und mit einem Latentwärmespeicher (9), der ein Phasenwechselmaterial (9.1) aufweist, **dadurch gekennzeichnet, dass** der Latentwärmespeicher (9) eine feste, wärmeleitende Trägerstruktur (9.2) aufweist, welche das Phasenwechselmaterial (9.1) aufnimmt, wobei der Latentwärmespeicher (9) im Profil (8) vorgesehen ist.

2. Batterieträger nach Anspruch 1, **dadurch gekennzeichnet, dass** ein zellulärer, insbesondere offenporiger, vorzugsweise metallischer, Werkstoff die feste, wärmeleitende Trägerstruktur (9.2) des Latentwärmespeichers (9) ausbildet.

3. Batterieträger nach Anspruch 2, **dadurch gekennzeichnet, dass** Wachs das Phasenwechselmaterial (9.1) des Latentwärmespeichers (9) ausbildet.

4. Batterieträger nach Anspruch 1, 2 oder 3, **dadurch gekennzeichnet, dass** das Profil (8) von einem, insbesondere geschlossenen, Hohlprofil oder offenen Profil, insbesondere Hutprofil (8.1), ausgebildet wird.

5. Batterieträger nach einem der Ansprüche 1 bis 4, **dadurch gekennzeichnet, dass** der Batterieträger (1) eine Leitung (10.1)für eine Flüssigkeit (11) zur Temperierung des Batteriemoduls (15) aufweist, wobei die Leitung (10.1) vom Latentwärmespeicher (9) abschnittsweise ummantelt ist.

6. Batterieträger nach einem der Ansprüche 1 bis 5, **dadurch gekennzeichnet, dass** die Halterung (7) mehrere Profile (8) aufweist, welche eine, insbesondere selbstragende, Rahmenstruktur im Batteriegehäuse (2) ausbilden.

7. Batterieträger nach einem der Ansprüche 1 bis 6, **dadurch gekennzeichnet, dass** Profile (8) als Längs- und Querträger (13, 14) vorgesehen sind.

8. Batterieträger nach einem der Ansprüche 1 bis 7, **dadurch gekennzeichnet, dass** eine, insbesondere tiefgezogene, Wanne oder ein Faltkasten das Batteriegehäuse (2) ausbildet.

9. Fahrzeug mit einem Karosserieboden (101) und mit einem Batterieträger (1) nach einem der Ansprüche 1 bis 8, **dadurch gekennzeichnet, dass** der Batterieträger (1) unterhalb des Karosseriebodens (101) angeordnet ist.
